# FASCICULE DE BREVET EUROPEEN

(11) **EP 2 233 247 B1**
(45) Date de publication et mention de la délivrance du brevet: **24.08.2011**
(21) Numéro de dépôt: 09156509.3
(22) Date de dépôt: 27.03.2009
(51) Int. Cl.: B23Q 39/02

(54) **Centre d'usinage autonome de haute production à prise de pièce verticale**
Autonomes Hochleistungs-Bearbeitungszentrum mit vertikaler Teileentnahme
High-production standalone machining centre taking parts vertically

(43) Date de publication de la demande: 29.09.2010
(73) Titulaire: Emissa S.A., 2400 Le Locle (CH)
(72) Inventeur: Boschi, Pierre, 2400 Le Locle (CH); Reymond, François, 25570 Grand Combe Châteleu (FR)
(74) Mandataire: Scheuzger, Beat Otto

(56) Documents cités:
- EP-A- 1 321 225
- EP-A- 1 346 788
- DE-A1- 10 235 518
- DE-A1- 19 744 157
- US-A- 5 781 983

## Description

### Domaine technique de l'invention

La présente invention se rapporte au domaine technique général de l'usinage de pièces industrielles et plus précisément au domaine technique des machines-outils à commande numérique.

La présente invention concerne plus particulièrement la configuration de machines-outils automatisées à têtes révolver multibroches pour centres d'usinage à commande numérique.

### Description de l'état de la technique

Les centres d'usinage à changeur d'outil sont biens connus. Ces centres d'usinage sont prévus pour travailler avec des outils simples. Il est toujours difficile d'utiliser des outils complexes et lourds comme Tête multibroche et renvoie d'angles dans des bonnes conditions. Il en résulte une production réduite et difficile avec l'utilisation de tels outils. Les centres d'usinage trouvent ainsi leur application dans diverses industries telles que : la micromécanique, l'horlogerie, l'automobile, l'aéronautique ou les moteurs marins de grandes dimensions.

Dans le cadre du développement des centres d'usinages et des machines-outils en général, il est recherché de façon constante à améliorer leurs performances tant sur le plan de la précision des tolérances des pièces usinées que sur le plan de la rapidité d'exécution des opérations d'usinage.

Dans la suite de la description, le terme palette devra être entendu comme un support amovible intimement lié à la pièce à usiner. Mais une palette peut comporter plusieurs faces d'usinage, donc plusieurs pièces. Ces palettes sont destinées d'une part à faciliter le chargement et le déchargement des pièces à usiner, d'autre part par le dispositif de préhension et la manutention desdites pièces à préparer les pièces suivantes à usiner en temps masqué, c'est-à-dire pendant l'opération d'usinage. Un centre d'usinage tel que présenté ci-après peut fonctionner avec ou sans palettes.

On connaît par exemple par l'intermédiaire du document publié WO 96/00633, un centre d'usinage pour usiner une pièce mécanique, comportant au moins deux unités d'usinage mobiles et distinctes, un porte-pièce comportant un dispositif de préhension pour solidariser et désolidariser la pièce ou une palette avec le porte-pièce, lequel est d'une part monté sur un chariot coulissant selon un axe horizontal et transversal au centre d'usinage et d'autre part monté mobile sur le chariot coulissant de manière à pouvoir se déplacer selon un axe vertical, ledit porte-pièce permettant grâce au dispositif de préhension de prélever la pièce ou la palette à usiner par le haut dans une zone de chargement, de déplacer et la pièce suspendue ou la palette dans une zone d'usinage et de décharger la pièce ou la palette usinée dans un zone de déchargement.

Un tel centre d'usinage présente néanmoins des inconvénients : des temps morts au cours de l'usinage. Il est avec des broches certes alternés mais qui travaillent toujours la même face. Ces broches et changeurs d'outil permettent de prendre des outils de tailles réduites en poids et dimensions. Il en résulte une productivité réduite qui est comparable à un centre d'usinage classique. Toutes ces particularités de fonctionnement font que le centre d'usinage décrit dans ce document ne permet pas d'aller dans le sens d'une optimisation significative du programme d'usinage et d'une amélioration des performances et productivités.

On connait également par l'intermédiaire du document publié EP 1 346 788 un autre exemple d'un centre d'usinage. Le dispositif de serrage, lequel supporte la ou les pièces à usiner, est déplaçable horizontalement et/ou verticalement. Cela signifie que cela permet de déplacer les pièces pour le travail ou cela permet de déplacer les pièces pendant que le travail est effectué. Une autre variante, à travers laquelle la façon de serrer la pièce permet encore plus de mouvement, est possible. Ce système qui permet plus de mouvement est surtout utilisé sur un axe tournant vertical ou horizontal. Les unités d'usinage utilisées, ne comportent qu'un seul boitier multibroches, et par conséquent l'opération du système n'est pas optimal. L'usinage n'est pas effectué avec la pièce suspendue.

### Exposé sommaire de l'invention

La présente invention a alors pour objet de proposer un nouveau centre d'usinage permettant de s'affranchir des limitations mentionnées ci-dessus, en améliorant de façon significative ses performances.

Le but de la présente invention vise par conséquent à réduire les temps morts au cours de programmes d'usinages, soit au cours des opérations d'usinages de chaque pièce soit au cours des changements de pièces à usiner ou au cours des changements d'outils d'usinage.

Un autre but de la présente invention vise à simplifier la manipulation des pièces à usiner d'une part et d'autre part permet l'utilisation d'outils d'usinage simple et conventionnel ou d'outils multiples lourds et complexes pour réaliser des opérations d'usinage dédiés à la pièce à usiner et en obtenir une très grande productivité.

Un autre but de la présente invention vise à réduire au mieux les contraintes liées à l'évacuation des copeaux et des produits de lubrification.

Selon l'invention, les deux unités d'usinage mobiles et distinctes sont disposées en vis-à-vis selon un axe longitudinal du centre d'usinage, de part et d'autre de la zone d'usinage. En plus le centre d'usinage comporte d'un côté de la zone d'usinage, une première unité d'usinage à tête révolver avec cassettes multibroches et de l'autre côté de la zone d'usinage, en vis-à-vis, une seconde unité d'usinage horizontale avec au moins une broche horizontale associée à un changeur d'outils automatique.

Il est ainsi possible d'utiliser une tête révolver de grande dimension avec des cassettes multibroches et d'usiner une face en une seule fois tandis que l'unité d'usinage en vis-à-vis exécute des opérations d'usinage spécifiques et délicates.

Selon un exemple de réalisation conforme à l'invention, le dispositif de préhension est monté mobile sur le porte-pièce pour faire tourner la pièce ou la palette suspendue autour d'un axe de rotation vertical, de manière à positionner de façon optimale la pièce ou la palette suspendue par rapport à l'unité d'usinage correspondante.

La pièce ou la palette, solidaire du porte-pièce peut ainsi être déplacée selon un axe horizontal gauche-droite ou droite-gauche, selon un axe vertical haut-bas ou bas-haut et selon un axe de rotation vertical suspendue.

Selon un exemple de réalisation conforme à l'invention, le porte-pièce comporte des moyens pour pivoter selon un axe horizontal le dispositif de préhension, de manière à pivoter la pièce ou la palette.

Il est ainsi possible d'usiner entièrement les cinq faces d'une pièce suspendue dans la zone d'usinage.

Selon un exemple de réalisation conforme à l'invention, le centre d'usinage comporte de chaque côté de la zone d'usinage, une unité d'usinage horizontale avec au moins une broche horizontale associée à un changeur d'outils automatique.

Selon un exemple de réalisation conforme à l'invention, l'une des unités d'usinage horizontale est une unité à changement automatique de cassette multibroche soit pour le perçage, le fraisage lourd, le taraudage, l'alésage, le renvoi d'angle et autre opération d'usinage mécanique.

Selon un exemple de réalisation conforme à l'invention, l'unité d'usinage à tête révolver est associée à un magasin de multibroches pour changer en automatique les multibroches sur la tête révolver ou outils simples.

Il est remarquable par ailleurs que les changements d'outils se font en temps masqué, chaque unité d'usinage travaillant alternativement. Pendant qu'un outil travaille la pièce, l'outil de l'autre unité d'usinage est remplacé. Il n'y a donc pas de temps mort lié au changement d'outils. En outre, les changements d'outils sont effectués dans une zone protégée, en dehors de la zone d'usinage. Il n'y a donc pas de risques d'encombrements dans la zone d'usinage.

Le centre d'usinage conforme à l'invention permet dans toutes ses variantes de réalisation, d'aller chercher une pièce brute ou une palette dans la zone de chargement, d'amener la pièce ou la palette dans la zone d'usinage, et d'exécuter un nombre important d'opérations d'usinage, avec tête multiple et/ou avec un outil unique et ce, en un temps réduit au minimum.

Selon un exemple de réalisation conforme à l'invention, le centre d'usinage comporte sous la zone d'usinage, des moyens de récupération et d'évacuation par gravité, des copeaux et du lubrifiant.

Cette récupération est facilitée par le fait que la pièce est suspendue. Des moyens additionnels pour faciliter cette récupération, malgré la présence d'une unité d'usinage complémentaire dans le bas de la zone d'usinage, peuvent également être prévus.

Un autre avantage du centre d'usinage conforme à l'invention réside dans la maintenance. En effet, tous les éléments important et/ou vitaux du centre d'usinage sont accessibles par le haut et sont de ce fait plus facilement remplaçables. En outre, la disposition particulière des ces éléments par rapport à la zone d'usinage, réduit les contacts avec les copeaux et le lubrifiant. Le centre d'usinage nécessite donc des interventions d'entretien moins fréquentes.

Un autre avantage du centre d'usinage conforme à l'invention réside dans sa très grande flexibilité pour s'adapter à l'évolution des pièces et ce à un moindre coût. Des résultats comparables ne peuvent pas être atteints avec des machines classiques spéciales, bien moins productives.

### Description_brève des dessins

L'invention et ses avantages apparaîtront avec plus de détails dans le cadre de la description qui suit avec des exemples de réalisation donnés à titre illustratif et non limitatif, en référence aux figures annexées qui représentent :
- la figure 1, une vue de profil d'un exemple de réalisation d'un centre d'usinage conforme à l'invention,
- la figure 2, une vue partielle selon une coupe A-A du centre d'usinage conforme à l'invention de la figure 1,
- la figure 3, une vue partielle de dessus d'un autre exemple de réalisation du centre d'usinage conforme à l'invention,
- la figure 4, une vue partielle de dessus d'un exemple de réalisation du centre d'usinage conforme à l'invention avec un dispositif d'approvisionnement et d'évacuation de pièces,
- la figure 5, une vue partielle selon une coupe A-A d'une autre variante de réalisation du centre d'usinage conforme à l'invention,
- la figure 6, une vue partielle de dessus d'un exemple de réalisation du centre d'usinage conforme à l'invention avec un autre exemple de réalisation de dispositif d'approvisionnement et d'évacuation de pièces ou palette,
- la figure 7, une vue partielle selon une coupe A-A d'une autre variante de réalisation du centre d'usinage conforme à l'invention,
- la figure 8, une vue partielle de dessus d'un autre exemple de réalisation du centre d'usinage conforme à l'invention,
- la figure 9, une vue partielle de dessus d'un autre exemple de réalisation du centre d'usinage conforme à l'invention,
- la figure 10, une vue partielle de dessus d'un exemple de réalisation du centre d'usinage conforme à l'invention avec un exemple supplémentaire de réalisation d'un dispositif d'approvisionnement et d'évacuation de pièces,
- la figure 11, une vue partielle de dessus d'un exemple de réalisation du centre d'usinage conforme à l'invention avec une variante de réalisation de dispositif d'approvisionnement et d'évacuation de pièces de la figure 10, et
- la figure 12, une vue partielle selon une coupe d'une variante de réalisation du centre d'usinage conforme à l'invention.

### Exposé détaillé de l'invention

Les éléments structurellement et fonctionnellement identiques, présents dans plusieurs figures distinctes, sont affectés d'une seule et même référence numérique ou alphanumérique.

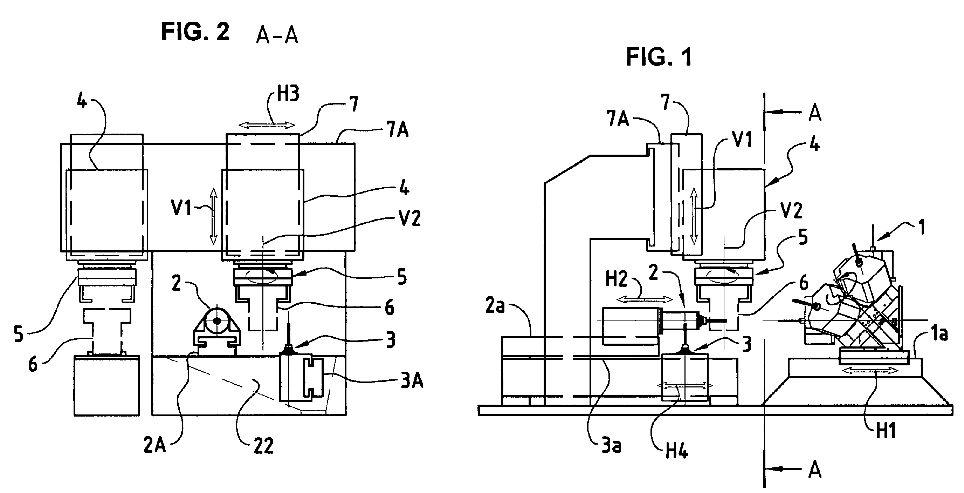

Les figures 1 et 2 illustrent, en vue de profil, un exemple de réalisation d'un centre d'usinage conforme à l'invention.

Le centre d'usinage comporte une première unité d'usinage 1 et une seconde unité d'usinage 2 disposées en vis-à-vis, de part et d'autre d'une zone d'usinage. Une unité d'usinage complémentaire 3 est également prévue dans le bas de la zone d'usinage.

La première unité d'usinage 1 est par exemple une unité à tête révolver coulissant selon un axe horizontal H1 sur un rail 1a.

La seconde unité d'usinage 2 est par exemple une broche horizontale coulissant sur un rail 2a selon un axe horizontal H2.

L'unité d'usinage complémentaire 3 est par exemple une broche verticale permettant de travailler la cinquième face dessous. Elle coulisse sur un axe horizontal H4 et sur un rail 3a pour des diverses opérations d'usinage et également de changement d'outils.

Le centre d'usinage comporte également un porte-pièce 4. Ce dernier comporte un dispositif de préhension 5 pour prélever une pièce 6 à usiner et pour solidariser ladite pièce 6 avec le porte-pièce 4.

Le porte-pièce 4 est monté sur un chariot 7, coulissant sur un rail 7a selon un axe horizontal H3 et transversal au centre d'usinage. Le porte-pièce 4 est également monté mobile sur le chariot 7 de manière à pouvoir se déplacer selon un axe vertical V1.

Le dispositif de préhension 5 est quant à lui monté mobile en rotation sur le porte-pièce 4 pour faire tourner la pièce 6 suspendue, autour d'un axe vertical V2. Une telle rotation permet de positionner de façon optimale la pièce 6 par rapport à l'unité d'usinage 1 ou 2 correspondante. Un positionnement angulaire précis de la pièce 6 par rapport à un outil est alors possible.

Lorsque l'unité d'usinage complémentaire 3 est utilisée pour usiner la pièce 6 sur sa partie libre dirigée vers le bas, la broche verticale correspondante coulisse sur le rail 3a pour se positionner longitudinalement sous la pièce 6, cette dernière étant positionnée transversalement grâce au porte-pièce 4. Il est ainsi possible de travailler la pièce 6 par le dessous. Comme tous les axes d'usinage travaillent en alterné, il n'y a pas de perte de temps pour les changements d'outils. Pendant qu'un axe d'usinage travaille, les autres axes d'usinage changent d'outils et restent en position d'attente que les opérations d'usinage en cours soient terminées.

Le centre d'usinage illustré à la figure 1 comporte donc d'un côté de la zone d'usinage, une première unité d'usinage 1 à tête révolver avec têtes multibroches et de l'autre côté de la zone d'usinage, une seconde unité d'usinage 2 horizontale avec au moins une broche horizontale associée à un changeur d'outils automatique 8. La première unité d'usinage 1 va effectuer des usinages à différents niveaux de la pièce 6, soit de bas en haut selon l'axe d'usinage vertical et vice versa, soit de gauche à droite et vice versa selon l'axe d'usinage horizontal. L'axe vertical V2 de rotation de la pièce 6 permet de présenter ladite pièce 6 sous tous les angles de 0° à 360°. La tête révolver est par exemple équipée d'outils de fraisage, de têtes multibroches de perçage, d'alésage, de fraisage et de taraudage. La seconde unité d'usinage 2 va permettre d'effectuer des usinages qui n'ont pas été possible de réaliser avec la tête révolver. La seconde unité d'usinage 2 intervient donc pendant que la tête révolver va changer d'outil.

La figure 2 illustre plus précisément une vue selon la direction A-A repérée à la figure 1. Le porte-pièce 4 est représenté dans une position latérale dans la zone de chargement de la pièce 6, avant la préhension par le dispositif de préhension 5, ainsi que dans une zone d'usinage.

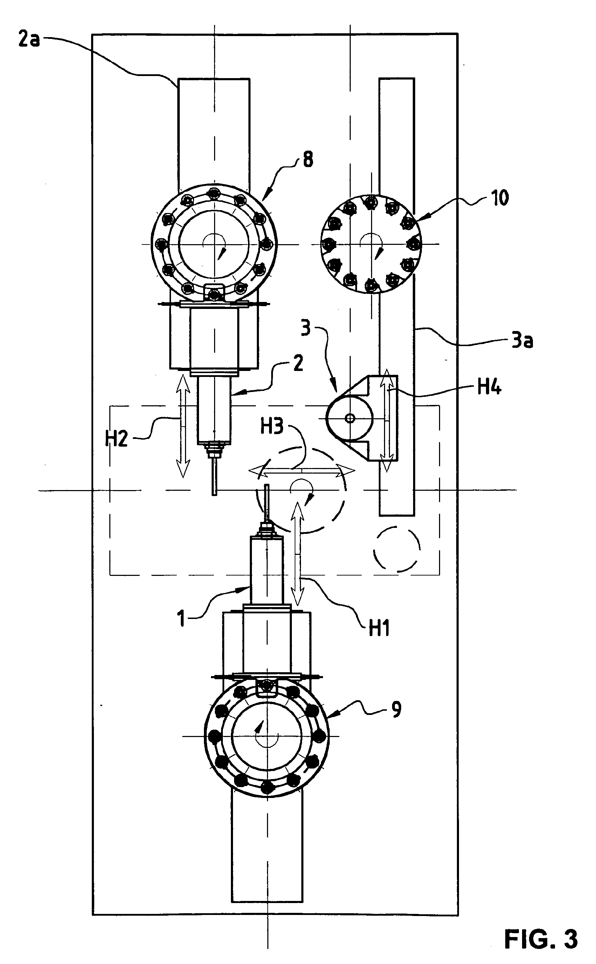

Le centre d'usinage illustré à la figure 3 comporte de chaque côté de la zone d'usinage, une unité d'usinage horizontale 1,2 avec au moins une broche horizontale associée respectivement à un changeur d'outils automatique 9 et 8. L'unité d'usinage complémentaire 3 comporte quant à elle une broche verticale avec un changeur d'outils automatique 10.

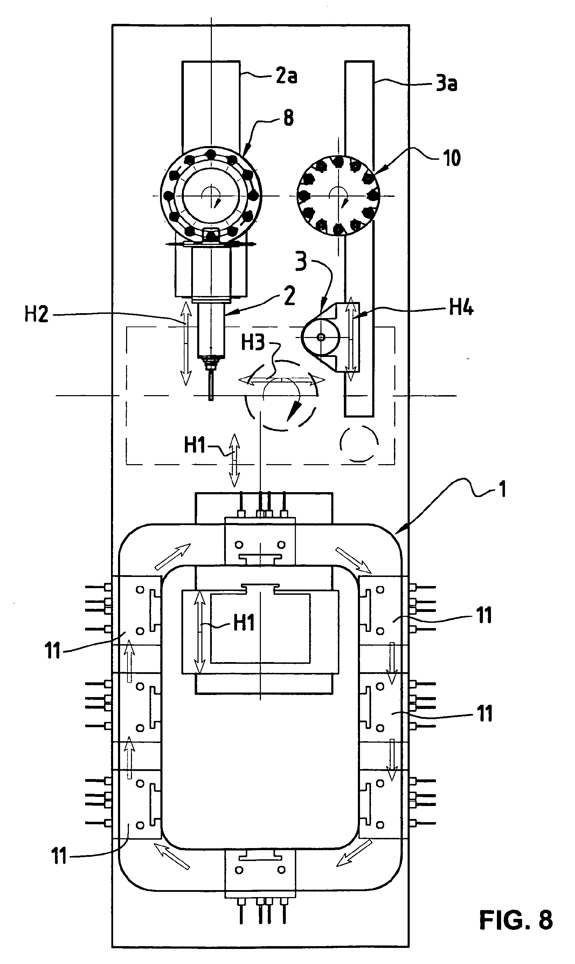

Dans l'exemple de réalisation représenté à la figure 8, la première unité d'usinage 1 est une unité d'usinage horizontale à changement automatique de cassettes multibroches 11.

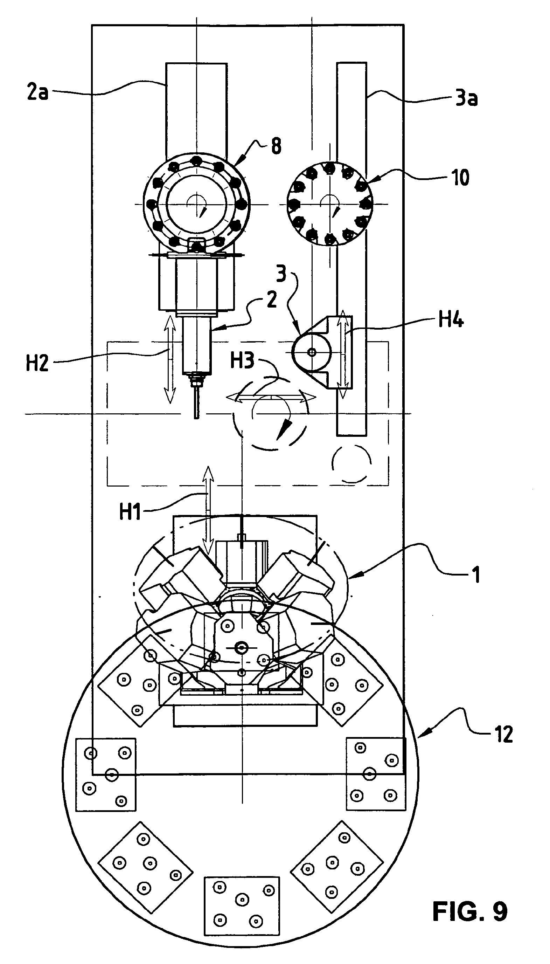

Dans l'exemple de réalisation représenté à la figure 9, la première unité d'usinage 1 à tête révolver est associée à un magasin multibroches 12 pour changer en automatique les multibroches sur la tête révolver.

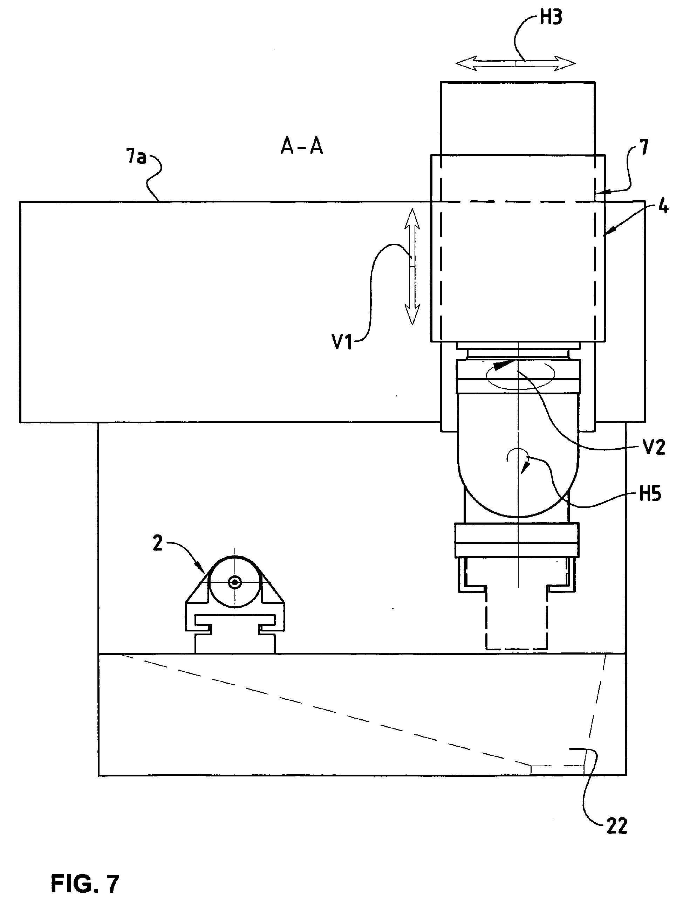

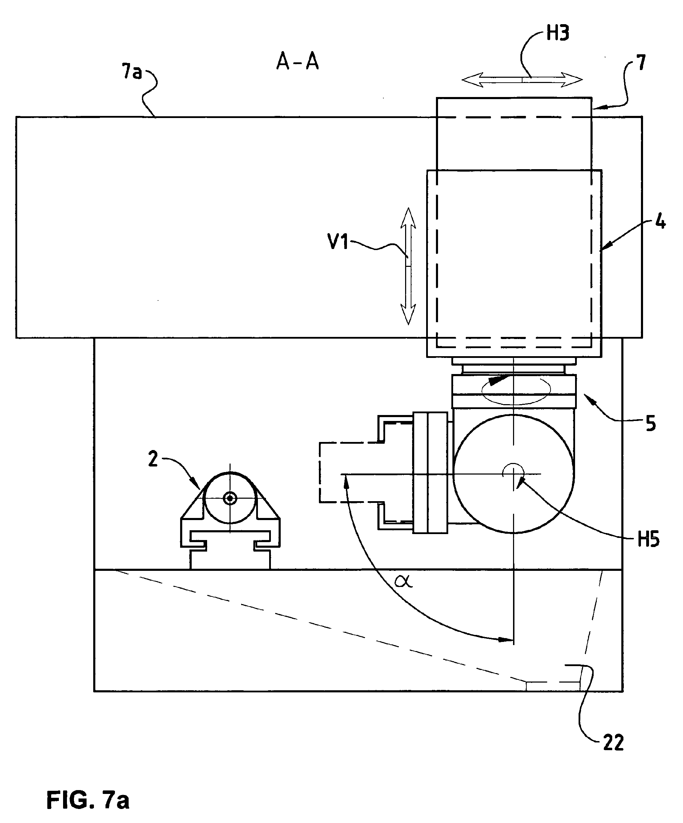

Dans l'exemple de réalisation représenté à la figure 7, le porte-pièce 4 comporte des moyens de rotation dans deux axes : axe V2 pour rotation 360° et un axe diviseur H5 qui permet un positionnement angulaire précis par rapport aux unités d'usinage 1 ou 2 dans un angle de pivotement compris entre 0° et 90°. Un pivotement par exemple de 90° permet d'usiner facilement la cinquième face de la pièce 6 avec une unité d'usinage ou avec une unité d'usinage à tête révolver. Les moyens de rotation et pivotement sont assurés par des moteurs asservis.

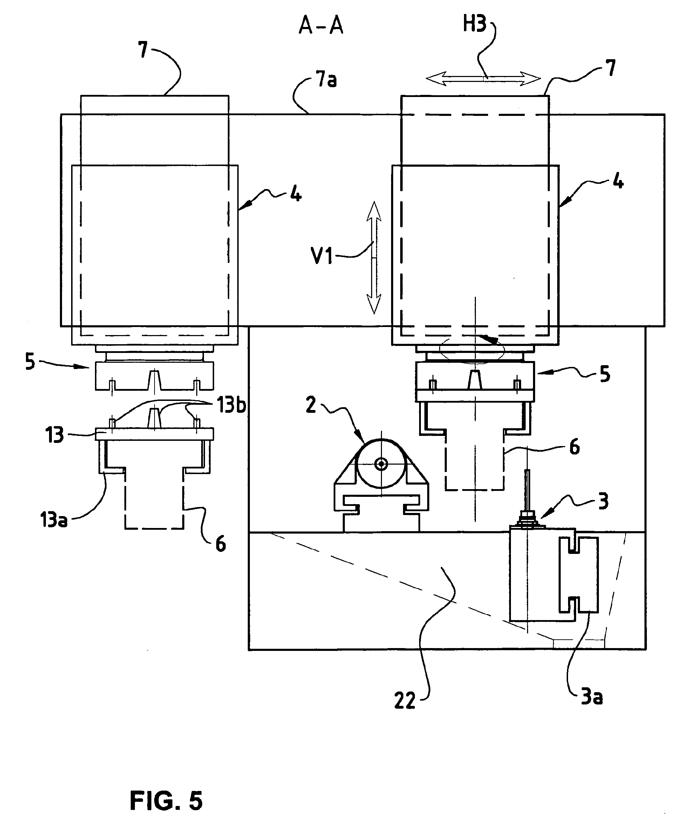

Le centre d'usinage illustré à la figure 5, montre une pièce 6 fixée sur une palette 13, laquelle va être saisie par le dispositif de préhension 5. La palette 13 présente par exemple une partie de fixation 13a, dans laquelle est maintenue la pièce 6 et une partie libre 13b dans laquelle vient s'engager le dispositif de préhension 5. La solidarisation entre la partie libre 13b et le dispositif de préhension 5 s'effectue par tout moyen connu et notamment complémentarité de formes type attachement d'outil. Auparavant, les pièces sont desserrées par l'opérateur lorsque l'usinage est terminé et serrées par l'opérateur lorsqu'il place la pièce brute.

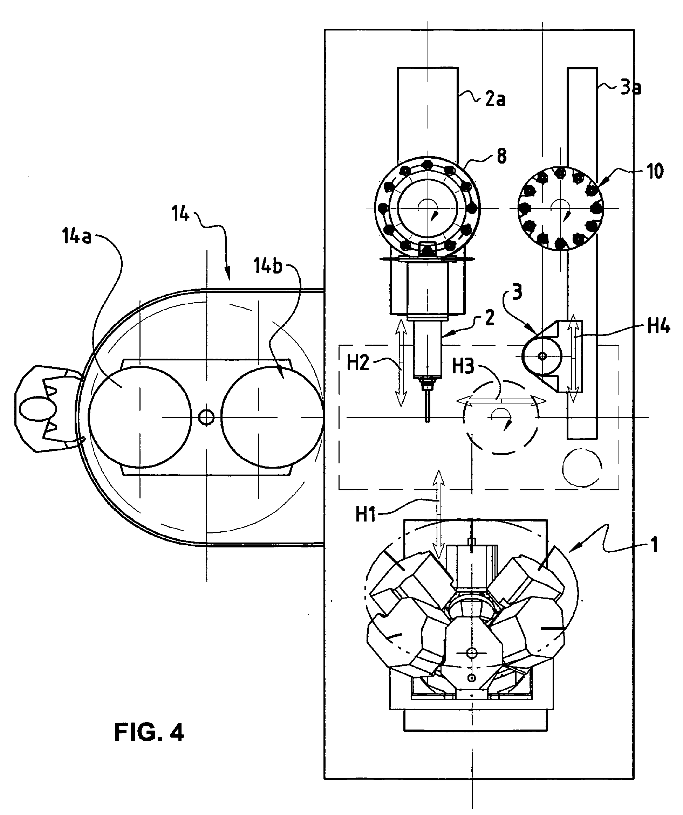

Dans l'exemple de réalisation illustré à la figure 4, le centre d'usinage conforme à l'invention comporte un système de palettisation 14 à deux postes 14a et 14b, dans la zone unique de chargement et de déchargement. Un opérateur effectue par exemple une palettisation d'une pièce 6 au poste 14a pendant que le centre d'usinage dépose une pièce 6 usinée montée sur sa palette 13 au poste 14b. Il s'en suit une permutation par rotation des postes 14a et 14b permettant d'une part au centre d'usinage de prélever une nouvelle pièce 6 brute à usiner et d'autre part à l'opérateur d'évacuer la pièce 6 usinée, le cas échéant en la séparant de sa palette 13 avant de palettiser une nouvelle pièce 6 brute.

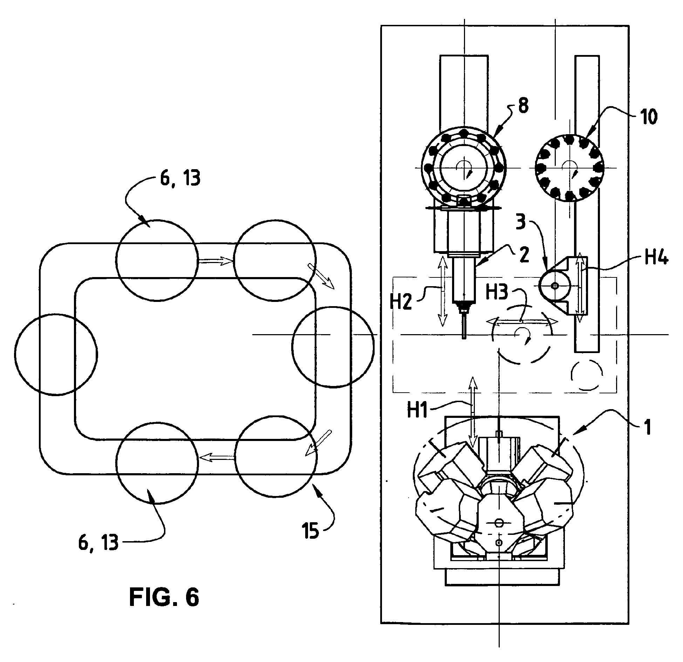

Selon un autre exemple de réalisation, illustré à la figure 6, le centre d'usinage conforme à l'invention comporte un magasin 15 de pièces 6 ou de palettes 13 dans la zone de chargement.

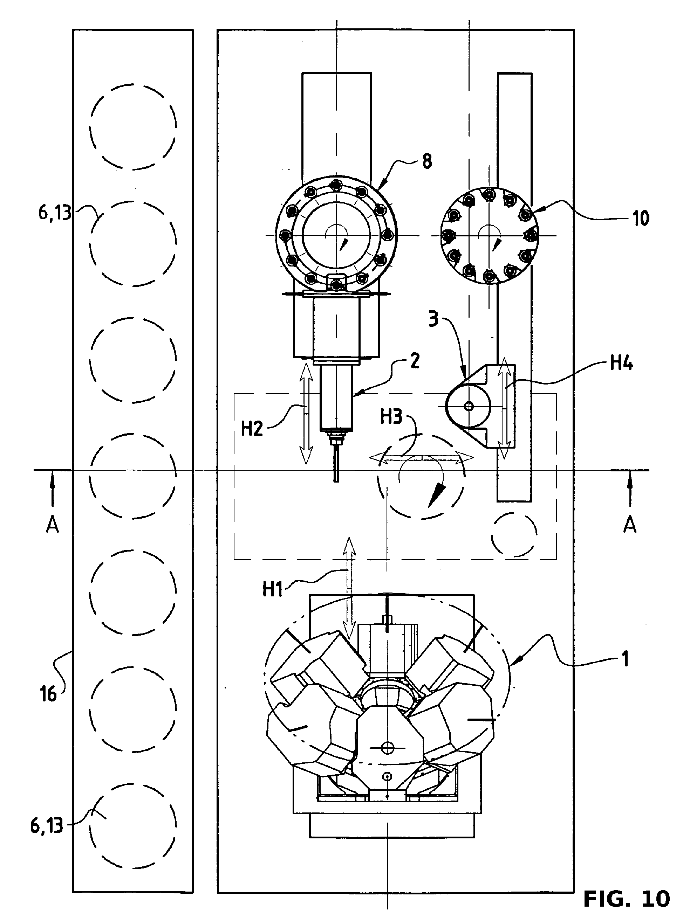

Selon un exemple de réalisation illustré à la figure 10, le centre d'usinage conforme à l'invention comporte un convoyeur longitudinal 16 unique, pour amener les pièces 6 ou palettes 13 brutes dans la zone unique de chargement et de déchargement ainsi que pour évacuer les pièces 6 ou palettes 13 usinées.

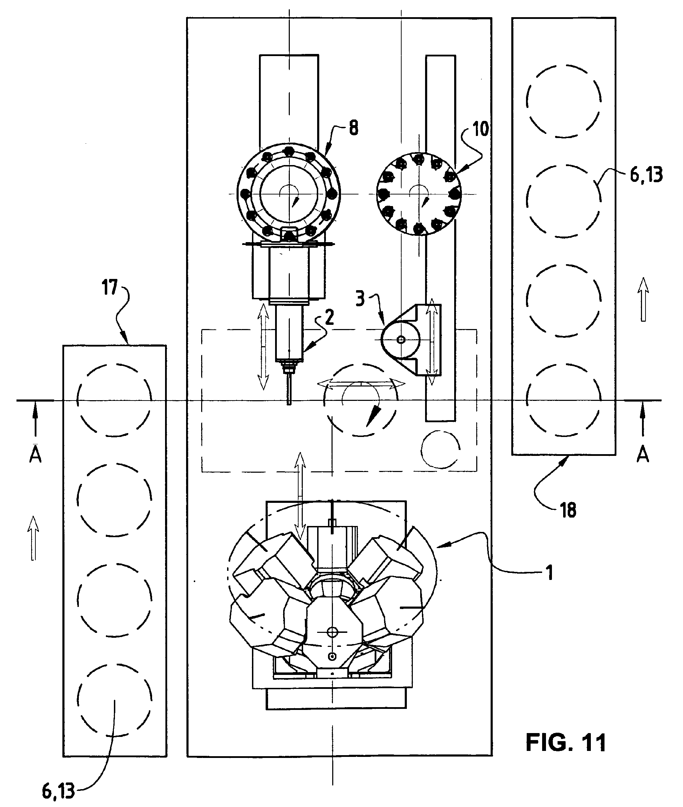

Selon une variante de réalisation conforme à l'invention illustrée à la figure 11, un premier convoyeur longitudinal 17 est disposé d'un côté du centre d'usinage, pour amener les pièces 6 ou palettes 13 brutes dans la zone de chargement et un second convoyeur longitudinal 18 est disposé de l'autre côté du centre d'usinage, pour évacuer les pièces 6 ou palettes 13 usinées de la zone de déchargement. L'arrivée d'une nouvelle pièce 6 brute dans la zone de chargement se fait ainsi en temps masqué lors du déchargement de la pièce 6 finie précédemment.

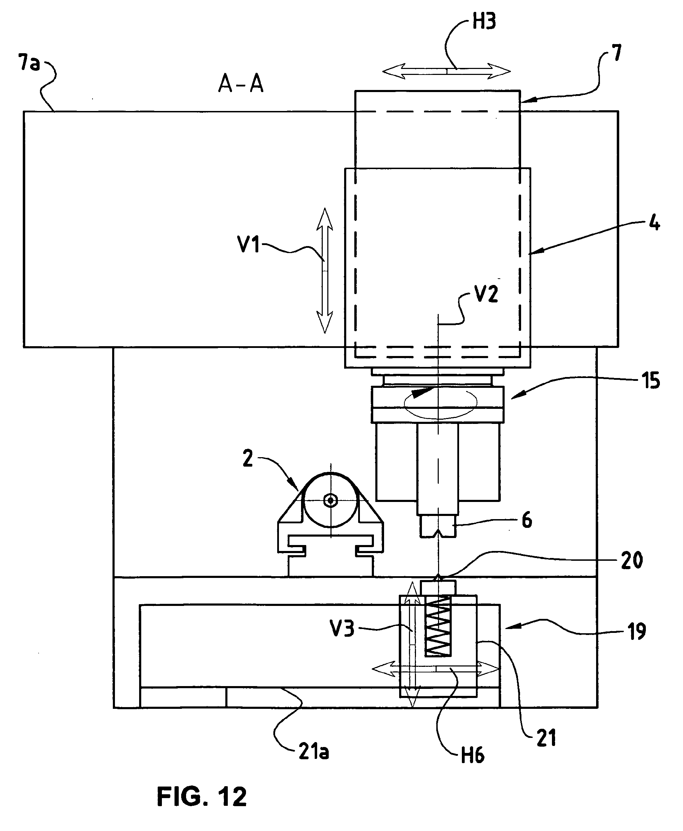

L'exemple de réalisation conforme à l'invention et illustré à la figure 12, comporte un dispositif de maintien 19 pour rigidifier la fixation de la pièce 6 ou de la palette 13 sur le porte-pièce 4, de manière à éviter des flexions de la pièce 6 ou de la palette 13 lors d'opérations d'usinage.

Le dispositif de maintien 19 comporte un système 20, rétractable et extensible selon une direction verticale V3, du genre contre-pointe, contre-broche ou bridage hydraulique venant en prise avec une face libre de la pièce 6 dirigée vers le bas. La pièce 6 est alors maintenue en position à ses deux extrémités basse et haute.

Le déplacement en translation du dispositif de maintien 19 s'effectue grâce à un chariot mobile 21 monté sur un rail horizontal 21 a. La translation horizontale selon un axe H6, du dispositif de maintien 19 est assurée par un servomoteur synchronisé avec un servomoteur assurant la translation horizontale du porte-pièce 4 selon l'axe H3.

Le centre d'usinage conforme à l'invention peut également comporter, sous la zone d'usinage, des moyens de récupération et ou d'évacuation 22, par gravité, des copeaux et du lubrifiant. Les moyens de récupération et d'évacuation 22 peuvent avantageusement comporter des moyens d'aspiration.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, tel que défini par les revendications annexées.

## Revendications

1. Centre d'usinage pour usiner une pièce (6) mécanique, comportant au moins deux unités d'usinage (1,2) mobiles et distinctes,
un porte-pièce (4) comportant un dispositif de préhension (5) pour solidariser et désolidariser la pièce (6) ou une palette (13) avec le porte-pièce (4), lequel est d'une part monté sur un chariot (7) coulissant selon un axe horizontal (H3) et transversal au centre d'usinage et d'autre part monté mobile sur le chariot (7) coulissant de manière à pouvoir se déplacer selon un axe vertical (V1),
ledit porte-pièce (4) permettant grâce au dispositif de préhension (5) de prélever la pièce (6) ou la palette (13) à usiner par le haut dans une zone de chargement, de déplacer et de suspendre la pièce (6) ou la palette (13) dans une zone d'usinage et de décharger la pièce (6) ou la palette (13) usinée dans un zone de déchargement,
les deux unités d'usinage (1,2) mobiles et distinctes sont disposées en vis-à-vis selon un axe longitudinal du centre d'usinage, de part et d'autre de la zone d'usinage, **caractérisé en ce que**
le centre d'usinage comporte d'un côté de la zone d'usinage, une première unité d'usinage (1) à tête révolver avec cassettes multibroches (11) et de l'autre côté de la zone d'usinage, en vis-à-vis, une seconde unité d'usinage (2) horizontale avec au moins une broche horizontale associée à un changeur d'outils automatique (8).

2. Centre d'usinage selon la revendication 1,
**caractérisé en ce que** le dispositif de préhension (5) est monté mobile sur le porte-pièce (4) pour faire tourner la pièce (6) suspendue autour d'un axe de rotation vertical (V2), de manière à positionner de façon optimale la pièce (6) suspendue par rapport à l'unité d'usinage correspondante.

3. Centre d'usinage selon l'une quelconque des revendications 1 à 2,
**caractérisé en ce que** le porte-pièce (4) comporte des moyens pour pivoter selon un axe horizontal (H5) le dispositif de préhension (5), de manière à pivoter la pièce (6) ou la palette (13) suspendue.

4. Centre d'usinage selon l'une quelconque des revendications 1 à 3,
**caractérisé en ce qu'**il comporte de chaque côté de la zone d'usinage, une unité d'usinage horizontale (1 ou 2) avec au moins une broche horizontale associée à un changeur d'outils automatique (9 ou 8).

5. Centre d'usinage selon la revendication 4,
**caractérisé en ce que** l'une (1) des unités d'usinage horizontal (1,2) est une unité à changement automatique de cassettes multibroches (11).

6. Centre d'usinage selon la revendication 1,
**caractérisé en ce que** l'unité d'usinage à tête révolver est associée à un magasin de multibroches (12) pour changer en automatique les multibroches sur la tête révolver.

## Claims

1. Machining centre for machining a mechanical piece (6), comprising at least two movable and separate machining units (1,2),
a workpiece holder (4) comprising a gripping device (5) for joining and separating the piece (6) or a pallet (13) with respect to the workpiece holder (4), which is, on the one hand, mounted on a carriage (7) sliding along an axis (H3) horizontal and transverse at the machining centre and, on the other hand, is mounted movable on the sliding carriage (7) in a manner so as to be able to be displaced along a vertical axis (V1),
the said workpiece holder (4) making it possible, thanks to the gripping device (5), to lift the piece (6) or the pallet (13) to be machined from above in a loading zone, to displace or to suspend the piece (6) or the pallet (13) in a machining zone and to unload the machined piece (6) or the pallet (13) in an unloading zone,
the two movable and separate machining units (1,2) are disposed opposite each other along a longitudinal axis of the machining centre, on either side of the machining zone, **characterised in that**
the machining centre comprises, on one side of the machining zone, a first machining unit (1) with turret head with multi-spindle cassettes (11) and on the other side of the machining zone, opposite, a second machining unit (2), which is horizontal, with at least one horizontal spindle associated with an automatic tool changer (8).

2. Machining centre according to claim 1,
**characterised in that** the gripping device (5) is mounted movable on the workpiece holder (4) in order to rotate the suspended piece (6) about a vertical axis of rotation (V2), in a manner so as to position the suspended piece (6) optimally with respect to the corresponding machining unit.

3. Machining centre according to any one of the claims 1 to 2,
**characterised in that** the workpiece holder (4) comprises means to pivot the gripping device (5) around a horizontal axis (H5), in a manner so as to pivot the suspended piece (6) or pallet (13).

4. Machining centre according to any one of the claims 1 to 3,
**characterised in that** it comprises on each side of the machining zone a horizontal machining unit (1 or 2) with at least one horizontal spindle associated with an automatic tool changer (9 or 8).

5. Machining centre according to claim 4,
**characterised in that** one (1) of the horizontal machining units (1,2) is a unit for automatic changing of multispindle cassettes (11).

6. Machining centre according to claim 1,
**characterised in that** the turret head machining unit is associated with a multispindle magazine (12) for changing the multispindles on the turret head automatically.

## Patentansprüche

1. Bearbeitungszentrum zur mechanischen Bearbeitung eines mechanischen Werkstücks (6), mit mindestens zwei beweglichen und gesonderten Bearbeitungs-Einheiten (1,2),
einem Werkstückhalter (4) mit einer Greifvorrichtung (5) zum Zusammenführen und Trennen des Werkstücks (6) oder einer Palette (13) mit bzw. von dem Werkstückhalter (4), welcher einerseits an einem Laufwagen (7) montiert ist, der entlang einer Achse (H3) horizontal und transversal am Bearbeitungszentrum gleitet und andererseits an dem gleitenden Laufwagen (7) derart beweglich montiert ist, dass er entlang einer vertikalen Achse (V1) verschiebbar ist,
wobei der Werkstückhalter (4) wegen der Greifvorrichtung (5) ermöglicht, das zu bearbeitende Werkstück (6) oder die Palette (13) von oben in einem Ladebereich anzuheben, das Werkstück (6) oder die Palette (13) in einem Bearbeitungsbereich zu verschieben oder zu halten und das bearbeitete Werkstück (6) oder die Palette (13) in einem Abladebereich abzuladen,
wobei die beiden beweglichen und gesonderten Bearbeitungs-Einheiten (1,2) entlang einer Längsachse des Bearbeitungszentrums einander gegenüberliegend beiderseits des Bearbeitungsbereichs angeordnet sind, **dadurch gekennzeichnet, dass**
das Bearbeitungszentrum an einer Seite des Bearbeitungsbereichs eine erste Bearbeitungseinheit (1) mit einem Revolverkopf mit mehrspindligen Kassetten (11) aufweist und gegenüberliegend an der anderen Seite des Bearbeitungsbereichs eine horizontale, zweite Bearbeitungseinheit (2) mit mindestens einer einem automatischen Werkzeugwechsler (8) zugeordneten horizontalen Spindel aufweist.

2. Bearbeitungszentrum nach Anspruch 1,
**dadurch gekennzeichnet, dass** die Greifvorrichtung (5) an dem Werkstückhalter (4) beweglich montiert ist, um das aufgehängte Werkstück (6) um eine vertikale Drehachse (V2) derart zu drehen, dass das aufgehängte Werkstück (6) bezüglich der entsprechenden Bearbeitungseinheit optimal positioniert wird.

3. Bearbeitungszentrum nach einem der Ansprüche 1 bis 2,
**dadurch gekennzeichnet, dass** der Werkstückhalter (4) Mittel aufweist, um die Greifvorrichtung (5) um eine horizontale Achse (H5) derart zu verschwenken, dass das aufgehängte Werkstück (6) oder die Palette (13) verschwenkt wird.

4. Bearbeitungszentrum nach einem der Ansprüche 1 bis 3,
**dadurch gekennzeichnet, dass** es auf jeder Seite des Bearbeitungsbereichs eine horizontale Bearbeitungseinheit (1 oder 2) mit mindestens einer einem automatischen Werkzeugwechsler (9 oder 8) zugeordneten horizontalen Spindel aufweist.

5. Bearbeitungszentrum nach Anspruch 4,
**dadurch gekennzeichnet, dass** eine (1) der horizontalen Bearbeitungseinheiten (1,2) eine Einheit zum automatischen Wechseln von mehrspindligen Kassetten (11) ist.

6. Bearbeitungszentrum nach Anspruch 1,
**dadurch gekennzeichnet, dass** die Bearbeitungseinheit mit einem Revolverkopf einem mehrspindligen Magazin (12) zugeordnet ist, um die Mehrfachspindeln an dem Revolverkopf automatisch zu wechseln.
